# EUROPEAN PATENT SPECIFICATION

(11) **EP 2 594 423 B1**
(45) Date of publication and mention of the grant of the patent: **05.11.2014**
(21) Application number: 11189993.6
(22) Date of filing: 21.11.2011
(51) Int. Cl.: B60K 37/06, G05G 1/00, G05G 1/08, G05G 1/10, G05G 5/03, G05G 5/04, G05G 5/06, G05G 9/047, H01H 19/11, H01H 25/04, H01H 25/06, H01H 19/00, H01H 19/58, H01H 25/00

(54) **Control device**
Steuervorrichtung
Dispositif de commande

(43) Date of publication of application: 22.05.2013
(73) Proprietor: Valeo Autoklimatizace k.s., 269 01 Rakovnik PSC (CZ)
(72) Inventor: Krupka, Ales, 149 00 Praha 4 (CZ)
(74) Representative: Croonenbroek, Thomas Jakob

(56) References cited:
- EP-A2- 1 480 238
- DE-A1- 10 310 056
- DE-A1-102008 014 566
- FR-A- 1 439 874
- US-A1- 2009 095 614

## Description

The invention relates to a control device in the field of control panels used for controlling various items of equipment, notably for motor vehicles.

It relates more particularly to a control device with notching means making it possible to ensure indexation in order to keep a control selector, such as a rotary knob or a joystick, of a control panel in a chosen angular position.

Such control panels find an application in many fields, such as radio, navigation, telephony, and so on.

These control panels may be used in particular in the motor vehicle field in order to control an item of equipment, notably a heating, ventilation and/or air conditioning device of the interior of a motor vehicle.

Traditionally, those control panels comprise a board, at least one control selector or button mounted so as to rotate on the board about an axis and comprising a notched ring furnished with notches, and an indexing member supported by the board and arranged to interact with the notches.

Thus the control selector can be moved into any one of a plurality of chosen angular positions, or indexed positions, while it is fixed in the axial direction.

In each indexed position, the indexing member interacts with a notch of the notched ring. This makes it possible to define a succession of different positions which correspond on each occasion to a particular value of adjustment of the equipment that is controlled by the panel.

The indexing member may be made in the form of a leaf spring, also called a "notching leaf" interacting with the notches of the notched ring in order to define the indexed positions.

An example of a control device is disclosed in US-A-2009/95614.

During the use of such a control device friction are unnecessarily created as they don't contribute to the haptic feeling by the user.

Those unnecessary frictions can adversely affect the use of the control device and in particular the feeling for the user who must handle the control button.

Further, such control device have to be in adequacy with inherent constraints in motor vehicle use. In particular, the haptic feeling to the end user must be strong enough in order to distract the driver's attention as little as possible.

The object of the present invention is notably to overcome at least partially the aforementioned drawbacks of the prior art.

For this reason, the invention proposes a control device comprising:
- at least one selector able to be shifted in at least two angular positions and having a circumferential ring, and
- notching means for retaining said at least one selector in said angular positions, said notching means comprising a first notching member fixedly mounted in said control device and interacting with said circumferential ring in order to define said at least two angular positions,
characterized in that said notching means further comprise a second notching member interacting with said circumferential ring, said first and second notching members being arranged on either side of said circumferential ring so that said at least one selector is mounted in said control device via a floating mount between said first and second notching members.

With such a control device with two notching members retaining the selector or button which is thus floating mounted, the frictions of no effect to the haptic feeling are avoided.

Moreover, the haptic feeling can be improved due to the use of two notching means.

By virtue of the invention, the control device may also comprise one or more of the following characteristics, taken separately or in combination:
- said circumferential ring is a notched ring provided with first notches and second notches respectively defined on the bottom and top sides of said notched ring, said first notches being able to interact with said first notching member, and second notches with said second notching member;
- said first and second notching members are respectively made by leaf springs with circular shape;
- said first and second notching members are respectively made in the form of indexing ring comprising at least one index interacting with said circumferential ring;
- said first and second indexing rings respectively comprise at least two indexes equally distributed over said indexing ring;
- an index is made in the form of a boss, which turns its convexity toward the associated side of said circumferential ring;
- said first and second notching members are defined so that in all indexing positions, botch notching members are held in a stable position;
- said first and second notching members are defined so that in all indexing positions, said at least one index of each notching member is placed in an associated notch of said notched ring;
- said first and second notching members are defined so that in one indexing position, said first notching member is held in a stable position while said second notching member is placed in an unstable position, and conversely;
- said at least one selector comprises a plurality of teeth, and said control device comprises an optical sensor interacting with said teeth for detecting the rotation of said at least one selector;
- said at least one selector is able to rotate about a rotation axis which extends perpendicularly to the general plane of a board of said control device;
- said at least one selector is able to tilt;
- said at least one selector is able to move axially in direction of an axis which extends perpendicularly to the general plane of a board on said control device;
- said first notching member is fixed to said control device by one of screws or rivets;
- said second notching member is intended to be retained by a frame of a control panel including said control device;
- said control device is intended to be mounted in the control panel of a motor vehicle.

Other characteristics and advantages of the invention will appear more clearly on reading the following description, which is given as a non-limiting illustrative example, and the attached drawings, among which:
- figure 1 is a view in perspective of a control device,
- figure 2 is an exploded view in perspective of the control device of figure 1,
- figure 3 is a view in section from above of rotary button mounted on the control device, and
- figure 4 is a schematic graphic showing the amplitude of the rotary torque of a control device from the prior art and showing the amplitude of the rotary torque of the control device of the invention.

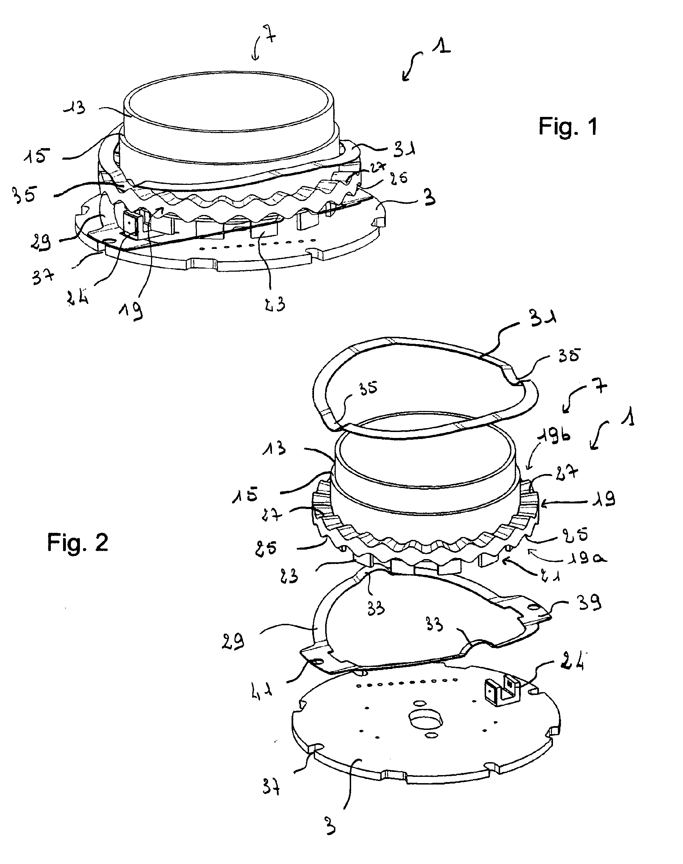

Reference is made first to figures 1 and 2 which show a control device, designated in its entirety by reference 1.

In a preferred exemplary embodiment, this control device 1 is designed to be mounted on the control panel of a motor vehicle in order to control various parameters associated with an item of equipment of this vehicle, in particular a heating, ventilation and/or air conditioning installation of the interior of a vehicle.

The control device 1 comprises a board 3, of generally flat shape on which is mounted in the example, one button 7 such as a rotary button 7.

The board 3 may be a printed circuit board, also named PCB, with an electronic circuit.

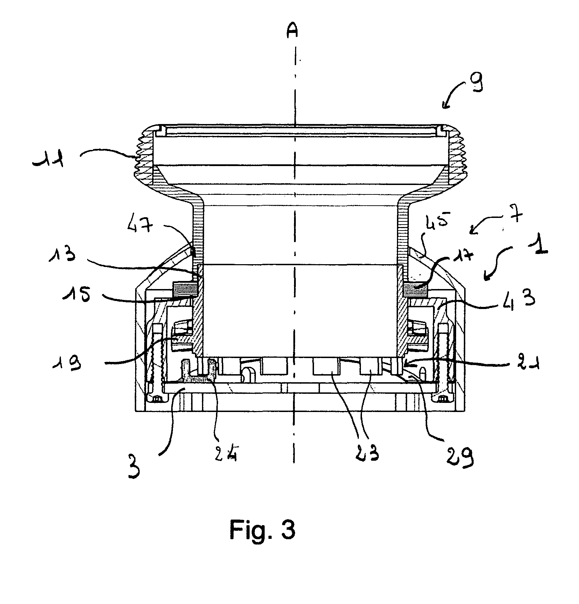

By instance, the button 7 is arranged so as to be rotated manually by the user, who may be the driver, in one direction or the other about a rotation axis A which extends perpendicularly to the general plane of the board 3 (see figure 3).

For that purpose, the button 7 comprises a prehension member 9 able to be operated by the user, as said before in rotation.

Different embodiments could be envisaged to which the present invention is equally applicable. Notably, the button 7 may be a member able to tilt such as a joystick which combines movements in rotation and in tilting. The button 7 may also has a push button function, that means able to move axially in direction to axis A.

The prehension member 9 comprises a body 11, which may be striated in order to make it easier to be grasped by the user.

The button 7 further comprises a control body 13 bound up with the body 11 of said prehension member 9.

The control body 13 is extended by an abutment ring 15 interacting with a protection ring 17. Indeed, in the case of a rotary button 7 the protection ring 17 may be arranged in order to prevent damage in case of the user pushes the rotary button 7.

The button 7 further comprises a circumferential ring such as a notched ring 19, and comprises a toothed ring 21 defining a plurality of axial teeth 23 extending on axis A and placed respectively one after the other.

According to one exemplary embodiment, the teeth 23 of the button 7 interface with an encoding device 24.

The encoding device 24 is placed on the electronic circuit arranged on the board 3 in order to perform an encoding function. In the exemplary embodiment, the encoding function is performed by an optical sensor 24. In this configuration, the teeth 23 interrupt light beams when the button 7 is turned.

The notched ring 19, for its part, has first notches 25 on its bottom side 19a, that means the one oriented toward the board 3. The notched ring 19 also has second notches 27 on its top side 19b opposite the bottom side 19a, that means the one oriented toward the prehension member 9. Thus, the notched ring 19 has a notching shape on both sides.

The notched ring 19 may have many embodiments.

Preferably, the notched ring 19 comprises on its bottom 19a and top 19b sides respectively a succession of waves or hollows in an arc of a circle defining the notches 25 and 27.

An alternative embodiment of the notched ring 19 is a succession of bosses in the form of an arc of a circle which are placed on its bottom 19a and top 19b sides respectively, said bosses extending in a parallel direction to axis A. These bosses thus define a series of notches, each formed at the join of two consecutive bosses.

It is to be understood that the notches 25,27 may be made over the whole or over only a portion of the bottom 19a or top 19b side of the notched ring 19.

The angular gaps defined by these notches 25,27 may be equal or different, depending on the chosen applications.

Moreover the second notches 27 may be arranged opposite to the first notches 25, as illustrated in reference to figures 1 and 2, or not.

The shape of the bosses or of the hollows may be of many variants, depending on the desired haptic feeling when the user rotates the button 7.

The button 7 can be kept in a chosen angular position by interaction of a first notching means 29 with bottom side 19a of the notched ring 19, and by interaction of a second notching means 31 with top side 19b of the notched ring 19.

Referring now to figure 2, in the illustrated embodiment, the notching means 29,31 are indexing means 29,31. More precisely, the indexing rings 29 and 31 are made in the form of leaf springs with circular shape.

Thus, the button 7 can be kept in a chosen angular position by interaction of the first indexing ring 29 with the first notches 25, and by interaction of the second indexing ring 31 with the second notches 27 of the notched ring 19.

The first indexing ring 29 comprises at least one first index 33, in this example two first indexes 33 interacting with the first notches 25 of the notched ring 19.

The first indexes 33 are equally distributed over the first indexing ring 29. In other words, the angle between two successive first indexes 33 is identical. Several first indexes 33 may be distributed symmetrically over the first indexing ring 29.

Moreover, the size of the first indexes 33 may be chosen to be sufficiently small to interfere with and enter the shape and geometry of the first notches 25.

The first indexes 33 may be made in the form of bosses with their convexity turned toward the first notches 25 of the notched ring 19.

When the prehension member 9 is rotated, the first indexes 33 follow the curvature of the first notches 25 of the notched ring 19.

In the same manner, the second indexing ring 31 comprises at least one index 35, in this example two first indexes 35 interacting with the second notches 27 of the notched ring 19.

The second indexes 35 are equally distributed over the second indexing ring 31, so that the angle between two successive second indexes 35 is identical. Several second indexes 35 may be distributed symmetrically over the second indexing ring 31.

Further, the size of the second indexes 35 may also be chosen to be sufficiently small to interfere with and enter the shape and geometry of the second notches 25.

Like the first indexes 33, the second ones 35 may be made in the form of bosses with their convexity turned toward the second notches 27 of the notched ring 19. Thus, the convexity of the first indexes 33 and the convexity of the second indexes 35 are turned toward opposite directions, though both toward the notched ring 19.

When the prehension member 9 is rotated, the second indexes 35 follow the curvature of the second notches 27 of the notched ring 19.

Moreover, in order to enhance the feel when the button 7 is rotated, the notched ring 19 and the first 29 and second 31 indexing rings may be defined so that in all indexing positions, botch indexing rings 29,31 are held in a stable position. In other words, in all indexing positions the first indexes 33 and the second indexes 35 are respectively placed in an associated notch 25 or 27.

The elasticity of the indexing rings 29 and 31 performs an action tending to bring the indexes 33,35 into the hollow of a notch 25,27 and thus prevents the indexes 33,35 from being held in an unstable position on the apex separating two successive notches 25,27 when the prehension member 9 is rotated.

Thus, by rotating the prehension member, there is a given angle range in which the indexing rings 29,31 produce a spring force for returning into a stable position. This spring force is bigger than friction in the system. Also, between two stable indexing positions there is an angle interval in which the button 7 stay in an unstable position. This angle interval is smaller than in prior art solutions.

According to a particular embodiment, the notched ring 19 and the first 29 and second 31 indexing rings are defined so that in a first indexing position, the first indexing ring 29 is held in a stable position while the second indexing ring 31 is placed in an unstable position. That means in this first indexing position, the first indexes 33 are respectively placed in an associated first notch 25 while the second indexes 35 are between two consecutive second notches 27.

Thus, when the button 7 is rotated, first indexes 33 engage first notches 25 while second indexes 35 are disengaged from second notches 27.

Conversely, the notched ring 19 and the first 29 and second 31 indexing rings are defined so that in a second indexing position, the first indexing ring 29 is placed in a unstable position while the second indexing ring 31 is held in an unstable position. That means in this second indexing position, the second indexes 35 are respectively placed in an associated second notch 27 while the first indexes 33 are between two consecutive first notches 25.

Thus, when the button 7 is rotated, first indexes 33 are disengaged from first notches 25 while second indexes 35 engage second notches 27.

Such an arrangement allows a fine notching. Further, this double notching doesn't generate supplementary noise.

According to an alternative not shown, it may be possible to envisage inverting the members supporting the notches 25,27 and the indexes 33,35 interacting with said notches 25,27. Thus, the present invention also covers a control device 1 comprising :
- a circumferential ring 19 without notches but having first and second indexes respectively arranged on its bottom 19a and top 19b sides, and
- first 29 and second 31 notching means respectively having first and second notches interacting with the circumferential ring 19.

Thus, first indexes on bottom side of circumferential ring 19 interact with notches of the first notching means 29 while second indexes on top side of circumferential ring 19 interact with notches of the second notching means 31.

Finally, for retention in position of the first indexing ring 29 in the control device 1, the first indexing ring 29 is fixedly mounted on the board 3. The first indexing ring 29 may be screwed or clipped for example on board 3.

For that purpose, holes 37 may be provided on board 3, and the first indexing ring 29 may have fixation parts 39, such as fixation ears 39, provided with holes 41 complementary to holes 37. These holes 37 and 41, more visible on figure 2, allow the passage of fixation means, such as screws, rivets or clips.

Similarly to the first indexing ring 29, the second indexing ring 31 is fixedly mounted and does not move. The second indexing ring 31 may be designed to be retained by a frame 43 of the control panel of the motor vehicle. The board 3 may be screwed (figure 3) or clipped to this frame 43.

Furthermore, the retention in position of the button 7 is ensured by these two indexing rings 29 and 31.

Indeed, the button 7 is mounted in the control device 1 via a floating mount between the first 29 and the second 31 indexing rings. More precisely, it's the two-sided notched ring 19 which is mounted and clamped between both indexing rings 29 and 31.

This particular mount reduces friction in the control device.

In particular, this friction reduction allows the small angle interval in which the button 7 stay in an unstable position for a very fine notching.

Besides, with such a configuration of the notched ring 19 clamped between both indexing ring 29,31, the haptic feeling of the user is emphasized.

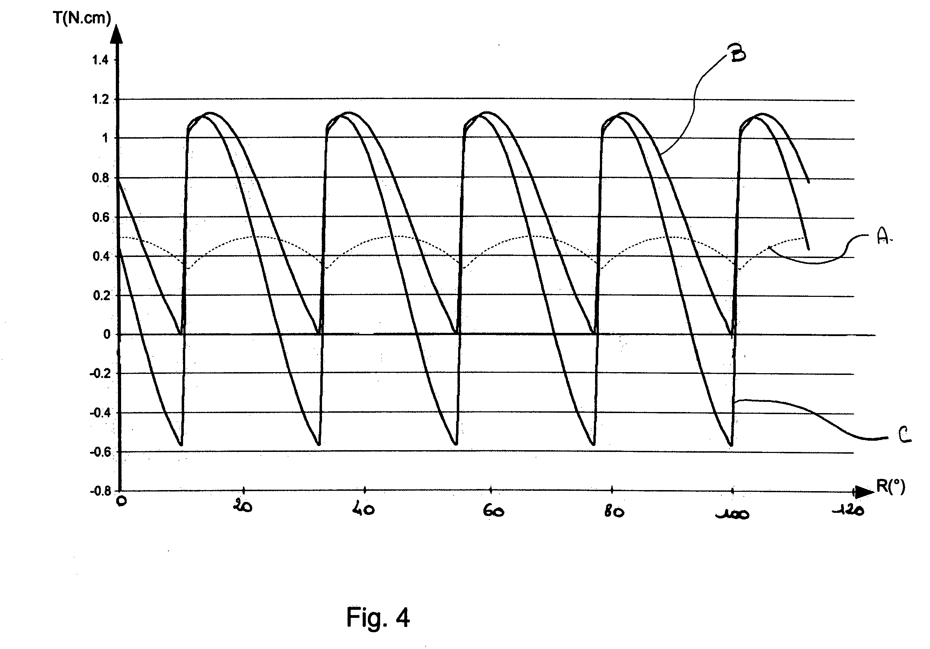

That improvement is explained in relation to figure 4.

Figure 4 shows a diagram with rotation angle R of the button 7 in (°) on abscissa axis X-axis, and rotary torque T in (N.cm) on ordinates axis Y-axis. This diagram illustrates :
- a first graph A in dotted lines showing a parasitic torque with a prior art solution,
- a second graph B in solid lines, relating to the resulting torque with a prior art solution,
- and a third graph C in solid lines, relating to the resulting torque of a control device according to the present invention.

In order to enhance the haptic feeling, a solution is to increase the amplitude of the rotary torque, and for that to increase the force of the spring. However, due to parasite friction in the support, schematically represented on graph A, only the maximal value of the amplitude increases and not the minimal value.

On the contrary, as represented on graph C, with the control device 1 of the invention, for the same force of spring, as well the maximal value as the minimal value of the amplitude increases. That improves the haptic feeling of the user.

Further, as it can be seen on figure 3 the control panel of the vehicle including such a control device 1 may comprise an opaque facade 45 featuring an aperture 47 for receiving the control device 1. Only the prehension member 9 can be seen by the user, the other components are hidden by the facade 45.

The invention has been previously described in the particular application of control panels of motor vehicle. Of course, the invention is not limited to this embodiment and may be applied to any other installation having a control panel with control members or buttons operated by a user in order to regulate various parameters of the installation.

Thus, such a control device 1 with a notched ring 19 having on its both bottom 19a and top 19b sides a notching shape and with two indexing rings 29 and 31 respectively interacting with either side 19a,19b of the notched ring 19, is mounted via a floating mount what reduces the friction in the system.

Moreover the haptic feeling of the user operating such a control device 1 is enhanced.

Further, a fine notching may be provided by reducing the angle interval of intermediate position between two wanted angular selection positions.

## Claims

1. Control device comprising :
- at least one selector (7) able to be shifted in at least two angular positions and having a circumferential ring (19), and
- notching means for retaining said at least one selector (7) in said angular positions, said notching means comprising a first notching member (29) fixedly mounted in said control device and interacting with said circumferential ring (19) in order to define said at least two angular positions,
said notching means further comprising a second notching member (31) interacting with said circumferential ring (19), said first (29) and second (31) notching members being arranged on either side of said circumferential ring (19) **characterized in that** said at least one selector (7) is mounted in said control device via a floating mount between said first (29) and second (31) notching members.

2. Control device according to claim 1, wherein said circumferential ring (19) is a notched ring (19) provided with first notches (25) and second notches (27) respectively defined on the bottom (19a) and top (19b) sides of said notched ring (19), said first notches (25) being able to interact with said first notching member (29), and second notches (27) with said second notching member (31).

3. Control device according to claim 1 or 2, wherein said first (29) and second (31) notching members are respectively made by leaf springs with circular shape.

4. Control device according to any one of the preceding claims, wherein said first (29) and second (31) notching members are respectively made in the form of indexing ring (29,31) comprising at least one index (33,35) interacting with said circumferential ring (19).

5. Control device according to claim 4, wherein said first (29) and second (31) indexing rings respectively comprise at least two indexes (33,35) equally distributed over said indexing ring (29,31).

6. Control device according to claim 4 or 5, wherein an index (33,35) is made in the form of a boss, which turns its convexity toward the associated side of said circumferential ring (19).

7. Control device according to any one of claims 1 to 6, wherein said first (29) and second (31) notching members are defined so that in all indexing positions, both notching members (29,31) are held in a stable position.

8. Control device according to claim 2 in combination with claims 4 and 7, wherein said first (29) and second (31) notching members are defined so that in all indexing positions, said at least one index (33,35) of each notching member (29,31) is placed in an associated notch (25,27) of said notched ring (19).

9. Control device according to any one of claims 1 to 6, wherein said first and second notching members are defined so that in one indexing position, said first notching member is held in a stable position while said second notching member is placed in an unstable position, and conversely.

10. Control device according to any one of the preceding claims, wherein said at least one selector (7) comprises a plurality of teeth (23), and wherein said control device comprises an optical sensor (24) interacting with said teeth (23) for detecting the rotation of said at least one selector (7).

11. Control device according to any one of the preceding claims, wherein said at least one selector (7) is able to rotate about a rotation axis (A) which extends perpendicularly to the general plane of a board (3) of said control device.

12. Control device according to any one of the preceding claims, wherein said at least one selector (7) is able to tilt.

13. Control device according to any one of the preceding claims, wherein said at least one selector is able to move axially in direction of an axis (A) which extends perpendicularly to the general plane of a board (3) on said control device.

14. Control device according to any one of the preceding claims, wherein said first notching member (29) is fixed to said control device by one of screws or rivets.

15. Control device according to any one of the preceding claims, wherein said second notching member (31) is intended to be retained by a frame (43) of a control panel including said control device.

16. Control device according to any one of the preceding claims, wherein it is intended to be mounted in the control panel of a motor vehicle.

## Patentansprüche

1. Steuervorrichtung, umfassend:
- mindestens einen Wahlschalter (7), der in mindestens zwei Winkelpositionen geschaltet werden kann und einen Umfangsring (19) aufweist, und
- Einkerbmittel zum Halten des mindestens einen Wahlschalters (7) in den Winkelpositionen, wobei die Einkerbmittel ein erstes Einkerbelement(29) umfassen, das fest in der Steuervorrichtung montiert ist und mit dem Umfangsring (19) zusammenwirkt, um die mindestens zwei Winkelpositionen zu definieren,
wobei die Einkerbmittel ferner ein zweites Einkerbelement(31) umfassen, das mit dem Umfangsring (19) zusammenwirkt, wobei das erste (29) und das zweite (31) Einkerbelement auf jeder Seite des Umfangsrings (19) angeordnet sind, **dadurch gekennzeichnet, dass** mindestens ein Auswahlschalter (7) über eine schwimmende Befestigung zwischen dem ersten (29) und zweiten (31) Einkerbelement in der Steuervorrichtung angeordnet ist.

2. Steuervorrichtung nach Anspruch 1, wobei der Umfangsring (19) ein eingekerbter Ring (19) mit ersten Kerben (25) und zweiten Kerben (27) ist, die jeweils an der unteren (19a) und oberen (19b) Seite des eingekerbten Rings (19) definiert sind, wobei die ersten Kerben (25) mit dem ersten Einkerbelement (29) und die zweiten Kerben (27) mit dem zweiten Einkerbelement (31) zusammenwirken können.

3. Steuervorrichtung nach Anspruch 1 oder 2, wobei das erste (29) und das zweite (31) Einkerbelement jeweils aus Blattfedern mit kreisförmiger Form hergestellt sind.

4. Steuervorrichtung nach einem der vorhergehenden Ansprüche, wobei das erste (29) und das zweite (31) Einkerbelement jeweils in Form eines Indexierrings (29, 31) hergestellt sind, der mindestens einen Index (33,35) umfasst, der mit dem Umfangsring (19) zusammenwirkt.

5. Steuervorrichtung nach Anspruch 4, wobei der erste (29) und der zweite (31) Indexierring jeweils mindestens zwei Indizes (33, 35) umfasst, die gleichmäßig über den Indexierring (29,31) verteilt sind.

6. Steuervorrichtung nach Anspruch 4 oder 5, wobei ein Index (33,35) in Form eines Vorsprungs hergestellt ist, dessen Konvexität in Richtung der zugehörigen Seite des Umfangsrings (19) weist.

7. Steuervorrichtung nach einem der Ansprüche 1 bis 6, wobei das erste (29) und das zweite (31) Einkerbelement derart definiert sind, dass beide Kerbelemente (29,31) in allen Indexierpositionen in einer stabilen Position gehalten werden.

8. Steuervorrichtung nach Anspruch 2 in Kombination mit Anspruch 4 und 7, wobei das erste (29) und das zweite (31) Einkerbelement derart definiert sind, dass mindestens ein Index (33,35) jedes Kerbelements (29,31) in allen Indexierpositionen in einer zugehörigen Kerbe (25,27) des eingekerbten Rings (19) angeordnet ist.

9. Steuervorrichtung nach einem der Ansprüche 1 bis 6, wobei das erste und das zweite Einkerbelement derart definiert sind, dass in einer Indexierposition das erste Einkerbelement in einer stabilen Position gehalten wird, während das zweite Einkerbelement in einer instabilen Position angeordnet ist und umgekehrt.

10. Steuervorrichtung nach einem der vorhergehenden Ansprüche, wobei der mindestens eine Auswahlschalter (7) mehrere Zähne (23) aufweist und wobei die Steuervorrichtung einen optischen Sensor (24) umfasst, der mit den Zähnen (23) zum Erkennen der Drehung des mindestens einen Wahlschalters (7) zusammenwirkt.

11. Steuervorrichtung nach einem der vorhergehenden Ansprüche, wobei der mindestens eine Wahlschalter (7) um eine Drehachse (A) drehen kann, die sich senkrecht zur allgemeinen Ebene der Platte (3) der Steuervorrichtung erstreckt.

12. Steuervorrichtung nach einem der vorhergehenden Ansprüche, wobei der mindestens eine Auswahlschalter (7) gekippt werden kann.

13. Steuervorrichtung nach einem der vorhergehenden Ansprüche, wobei der mindestens eine Auswahlschalter axial in Richtung einer Achse (A) bewegt werden kann, die sich senkrecht zur allgemeinen Ebene einer Platte (3) auf der Steuervorrichtung erstreckt.

14. Steuervorrichtung nach einem der vorhergehenden Ansprüche, wobei das erste Einkerbelement (29) entweder durch Schrauben oder Nieten an der Steuervorrichtung befestigt ist.

15. Steuervorrichtung nach einem der vorhergehenden Ansprüche, wobei das zweite Einkerbelement(31) von einem Rahmen (43) einer Steuertafel gehalten werden soll, die die Steuervorrichtung aufweist.

16. Steuervorrichtung nach einem der vorhergehenden Ansprüche, wobei diese in der Steuertafel eines Motorfahrzeugs montiert werden soll.

## Revendications

1. Dispositif de commande comprenant :
- au moins un sélecteur (7) susceptible d'être commuté dans au moins deux positions angulaires et ayant une bague circonférentielle (19), et
- des moyens de crantage pour retenir ledit au moins un sélecteur (7) dans lesdites positions angulaires, lesdits moyens de crantage comprenant un premier organe de crantage (29) monté fixement dans ledit dispositif de commande et interagissant avec ladite bague circonférentielle (19) afin de définir lesdites au moins deux positions angulaires,
lesdits moyens de crantage comprenant en outre un deuxième organe de crantage (31) interagissant avec ladite bague circonférentielle (19), lesdits premier (29) et deuxième (31) organes de crantage étant agencés de part et d'autre de ladite bague circonférentielle (19), **caractérisé en ce que** ledit au moins un sélecteur (7) est monté dans ledit dispositif de commande par le biais d'un montage flottant entre lesdits premier (29) et deuxième (31) organes de crantage.

2. Dispositif de commande selon la revendication 1, dans lequel ladite bague circonférentielle (19) est une bague crantée (19) pourvue de premiers crans (25) et de deuxièmes crans (27) respectivement définis sur les côtés inférieur (19a) et supérieur (19b) de ladite bague crantée (19), lesdits premiers crans (25) étant susceptibles d'interagir avec ledit premier organe de crantage (29), et lesdits deuxièmes crans (27) étant susceptibles d'interagir avec ledit deuxième organe de crantage (31).

3. Dispositif de commande selon la revendication 1 ou 2, dans lequel lesdits premier (29) et deuxième (31) organes de crantage sont respectivement constitués de lames ressorts présentant une forme circulaire.

4. Dispositif de commande selon l'une quelconque des revendications précédentes, dans lequel lesdits premier (29) et deuxième (31) organes de crantage sont respectivement réalisés sous la forme d'une bague d'indexation (29, 31) comprenant au moins un index (33, 35) interagissant avec ladite bague circonférentielle (19).

5. Dispositif de commande selon la revendication 4, dans lequel lesdites première (29) et deuxième (31) bagues d'indexation comprennent respectivement au moins deux index (33, 35) distribués de manière équidistante sur ladite bague d'indexation (29, 31).

6. Dispositif de commande selon la revendication 4 ou 5, dans lequel un index (33, 35) est réalisé sous la forme d'un bossage dont la convexité est tournée en direction du côté associé de ladite bague circonférentielle (19).

7. Dispositif de commande selon l'une quelconque des revendications 1 à 6, dans lequel lesdits premier (29) et deuxième (31) organes de crantage sont définis de telle sorte que, dans toutes les positions d'indexation, les deux organes de crantage (29, 31) soient maintenus dans une position stable.

8. Dispositif de commande selon la revendication 2 en combinaison avec les revendications 4 et 7, dans lequel lesdits premier (29) et deuxième (31) organes de crantage sont définis de telle sorte que, dans toutes les positions d'indexation, ledit au moins un index (33, 35) de chaque organe de crantage (29, 31) est placé dans un cran associé (25, 27) de ladite bague crantée (19).

9. Dispositif de commande selon l'une quelconque des revendications 1 à 6, dans lequel lesdits premier et deuxième organes de crantage sont définis de telle sorte que, dans une position d'indexation, ledit premier organe de crantage soit maintenu dans une position stable tandis que ledit deuxième organe de crantage est placé dans une position instable, et inversement.

10. Dispositif de commande selon l'une quelconque des revendications précédentes, ledit au moins un sélecteur (7) comprenant une pluralité de dents (23), et ledit dispositif de commande comprenant un capteur optique (24) interagissant avec lesdites dents (23) pour détecter la rotation dudit au moins un sélecteur (7).

11. Dispositif de commande selon l'une quelconque des revendications précédentes, dans lequel ledit au moins un sélecteur (7) est susceptible de tourner autour d'un axe de rotation (A) qui s'étend perpendiculairement au plan général d'un panneau (3) dudit dispositif de commande.

12. Dispositif de commande selon l'une quelconque des revendications précédentes, dans lequel ledit au moins un sélecteur (7) est susceptible de basculer.

13. Dispositif de commande selon l'une quelconque des revendications précédentes, dans lequel ledit au moins un sélecteur est susceptible de se déplacer axialement en direction d'un axe (A) qui s'étend perpendiculairement au plan général d'un panneau (3) sur ledit dispositif de commande.

14. Dispositif de commande selon l'une quelconque des revendications précédentes, dans lequel ledit premier organe de crantage (29) est fixé audit dispositif de commande par l'un parmi des vis ou des rivets.

15. Dispositif de commande selon l'une quelconque des revendications précédentes, dans lequel ledit deuxième organe de crantage (31) est destiné à être retenu par un cadre (43) d'un tableau de commande comportant ledit dispositif de commande.

16. Dispositif de commande selon l'une quelconque des revendications précédentes, le dispositif de commande étant destiné à être monté dans le tableau de commande d'un véhicule à moteur.
